# FASCICULE DE BREVET EUROPEEN

(11) **EP 3 983 654 B1**
(45) Date de publication et mention de la délivrance du brevet: **01.03.2023**
(21) Numéro de dépôt: 20742315.3
(22) Date de dépôt: 04.06.2020
(51) Int. Cl.: F01D 25/02, B64C 11/14, B64D 15/16, F01D 5/02, F02C 7/04

(54) **CÔNE D'ENTRÉE POUR UNE TURBOMACHINE D'AÉRONEF ET TURBOMACHINE D'AÉRONEF ASSOCIÉE**
EINTRITTSKEGEL FÜR EINE FLUGZEUGSTRÖMUNGSMASCHINE UND ZUGEHÖRIGE FLUGZEUGSTRÖMUNGSMASCHINE
INLET CONE FOR AN AIRCRAFT TURBOMACHINE AND CORRESPONDING AIRCRAFT TURBOMACHINE

(30) Priorité: 14.06.2019 FR 1906348
(43) Date de publication de la demande: 20.04.2022
(73) Titulaire: SAFRAN AIRCRAFT ENGINES, 75015 Paris (FR)
(72) Inventeur: BATONNET, Baptiste, René, Roger, 77550 MOISSY-CRAMAYEL (FR); LOUIS, Alban, François, 77550 MOISSY-CRAMAYEL (FR)
(74) Mandataire: Gevers & Orès
(86) Numéro de dépôt international: PCT/FR2020/050954
(87) Numéro de publication internationale: WO 2020/249888

(56) Documents cités:
- FR-A1- 2 898 939
- FR-A1- 2 943 725
- FR-A1- 2 943 726
- FR-A1- 3 027 878
- FR-B1- 2 898 939
- GB-A- 1 557 856

## Description

### Domaine technique de l'invention

Le domaine de la présente invention est celui des turbomachines, notamment celui des moteurs à turbine à gaz, par exemple et non limitativement un turboréacteur ou un turbopropulseur d'aéronef.

La présente invention concerne plus particulièrement un cône d'entrée d'air pour une turbomachine et une turbomachine d'aéronef.

### Arrière-plan technique

L'état de la technique comprend, notamment, les documents GB-A-1 557 856, FR-A1-2 943 726, FR-A1-3 027 878, FR-A1-2 943 725 et FR-A1-2 898 939.

Il est connu de l'état de la technique des turbomachines s'étendant suivant un axe longitudinal et comprenant, d'amont en aval, dans le sens d'écoulement des gaz, une soufflante, un ou plusieurs étages de compresseurs (par exemple un compresseur basse pression et un compresseur haute pression), une chambre de combustion, un ou plusieurs étages de turbine (par exemple, une turbine haute pression et une turbine basse pression), et une tuyère d'échappement des gaz.

De manière classique, de telles turbomachines comprennent, en outre, en amont un cône d'entrée d'air qui est monté sur la soufflante, par exemple par l'intermédiaire d'une virole amont généralement annulaire elle-même reliée à un arbre de compresseur basse pression de la turbomachine. La liaison entre le cône d'entrée et la virole amont est généralement réalisée par l'intermédiaire d'assemblages boulonnés. L'extrémité aval de la virole affleure les plateformes des aubes de soufflante, en se situant dans la continuité aérodynamique avant de celle-ci.

Un tel cône d'entrée comprend une extrémité amont en forme de pointe de cône centrée sur un axe de rotation du cône d'entrée, correspondant également à l'axe longitudinal de la soufflante et de l'ensemble de la turbomachine.

Cette pointe est connue pour être un point de la turbomachine favorisant l'accrétion de glace, étant donné que son centrage sur l'axe de rotation ne permet pas d'appliquer des forces centrifuges importantes. De ce fait, la glace se formant sur la pointe de cône d'entrée pourrait atteindre une taille élevée avant de se décrocher, avec le risque, lorsqu'elle finit par se désolidariser de la pointe, d'endommager les aubes de soufflante qu'elle percute ou le moteur de l'aéronef qui l'ingère. L'amas de glace peut également s'accumuler de manière inégale sur la pointe du cône d'entrée et entraîner ainsi des vibrations indésirables de la turbomachine.

Afin de pallier ce problème, il a été proposé d'implanter un système de dégivrage dont le but est de faire en sorte que la glace accrétée sur la pointe de cône soit éjectée avant d'atteindre une taille critique. Cependant, ce type de système est coûteux en termes de masse et d'encombrement, et surtout particulièrement délicat à mettre en place en raison de la nature tournante du cône d'entrée qui en est équipé.

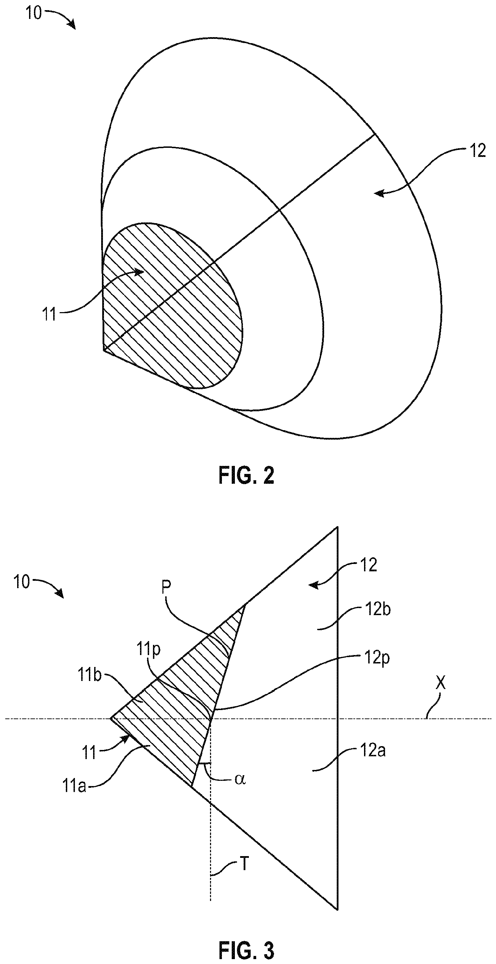

Il a également été proposé de réaliser, tel qu'illustré sur la figure 2, le cône d'entrée 10 avec une pointe amont 11 en matériau souple et un corps aval 12 en matériau rigide. En fonctionnement, la couche de glace accrétée notamment au niveau de la liaison entre la pointe et le corps, est fragilisée pour favoriser le détachement de la glace et réduire ainsi la taille des morceaux de glace potentiellement ingérés par la turbomachine. Or, cette façon de détacher la couche de glace, en fragilisation et laissant les fissures se propager le long de cette couche, peut être plus lente que prévue dans le cas du fonctionnement en vol de la turbomachine. En effet, plus la taille de la couche de glace est élevée, plus la formation de fissures sur cette couche est lente et difficile. Une telle solution n'est donc pas suffisante pour détacher rapidement et totalement la couche de glace se formant sur la pointe du cône d'entrée.

Dans ce contexte, il est intéressant de proposer une solution permettant de pallier les inconvénients de l'art antérieur, notamment en mettant en place une géométrie d'un cône d'entrée d'air favorisant davantage la rupture de façon rapide de la glace en fonctionnement.

### Résumé de l'invention

La présente invention propose ainsi un cône d'entrée pour une turbomachine d'aéronef, comportant un corps tronconique et une pointe en matériau élastiquement déformable fixée à une extrémité de plus petit diamètre dudit corps, la pointe comportant un sommet configuré pour être situé sur un axe de rotation du cône et une base de fixation sur ladite extrémité dudit corps. Ladite base s'étend dans un plan de liaison P. Ledit plan de liaison P est incliné par rapport audit axe de rotation. Ladite base a une forme générale circulaire ou ovale. Selon l'invention, ledit plan de liaison P est incliné par rapport à un plan transversal T perpendiculaire audit axe de rotation.

Un tel ovale peut être régulier en étant symétrique ou dissymétrique comme un oeuf qui serait considéré en section.

L'inclinaison du plan de liaison P entre la pointe et le corps tronconique du cône permet de concevoir une pointe en matériau élastiquement déformable qui est non axisymétrique. Cette conception présente l'avantage d'amplifier le phénomène de désaccrétion de la glace se formant sur le cône d'entrée d'air de la turbomachine en fonctionnement.

En effet, la pointe du cône d'entrée est réalisée en matériau élastiquement déformable, tel qu'un élastomère, de façon à permettre à la pointe de se déformer lors de sa mise en rotation et également de résister aux variations de température. Ceci favorise donc la libération des accrétions de glace se formant à la surface du cône d'entrée, tel que décrit ci-dessus. De plus, en fonctionnement, lorsque la glace est accrétée sur l'extrémité amont du cône d'entrée, la forme excentrique (ou non axisymétrique) de la pointe du cône d'entrée implique avantageusement que la glace est soumise à des forces centrifuges conséquentes. Ces forces favorisent son éjection, et lui permettent de se désolidariser du cône d'entrée, avant qu'elle n'atteigne une taille critique vis-à-vis d'un risque d'endommagement des aubes de soufflante situées en aval.

Ainsi, la forme excentrique de la pointe en matière élastiquement déformable permet de dé-symétriser les déplacements sous l'action de la force centrifuge. On crée ainsi un balourd à son extrémité qui favorise la déformation de la matière élastiquement déformable de la pointe pour créer davantage de fissures dans la glace et l'éjecter régulièrement avant que son volume ne soit trop important et dangereux en cas d'ingestion dans la turbomachine. Par conséquent, sous l'effet combiné de la force centrifuge et de la traction radiale de la glace (elle-même entraînée par cette force centrifuge), la pointe se déforme plus rapidement. Cette amplification de la déformation de la pointe du cône d'entrée entraîne donc une augmentation des contraintes appliquées sur la glace, de façon à augmenter la fréquence de détachement de la glace. Ce qui mène, à terme, à une réduction de la taille des morceaux de glace, et à une réduction des énergies d'impact subies par la turbomachine lors du détachement de glace.

L'invention présente par conséquent l'avantage de reposer sur une conception simple, offrant une très grande fiabilité, et peu pénalisante en termes de coûts et d'encombrement.

Le cône d'entrée pour la turbomachine d'aéronef selon l'invention peu comprendre une ou plusieurs caractéristiques suivantes, prises isolément les unes des autres ou en combinaison les unes avec les autres :
- ledit plan de liaison P est incliné d'un angle compris entre 10° et 35° par rapport au plan transversal audit axe de rotation ;
- la pointe est monobloc ;
- la pointe est collée sur le corps ;
- l'un des éléments choisis parmi la pointe et le corps comprend au moins un ergot engagé dans un évidement de l'autre des éléments, afin de bloquer en rotation la pointe sur le corps et/ou faciliter le centrage de la pointe sur le corps ;
- le corps est réalisé en matériau composite ou métallique ;
- la pointe est réalisée en élastomère.

L'invention a également pour objet une turbomachine d'aéronef, comportant un cône d'entrée selon l'invention.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig.1] la figure 1 est une demi vue schématique en coupe axiale d'une turbomachine d'aéronef, selon l'un des modes de réalisation de l'invention,
[Fig.2] la figure 2 est une vue schématique en perspective avant d'un cône d'entrée, selon l'art antérieur,
[Fig.3] la figure 3 est une vue schématique en coupe axiale d'un cône d'entrée, selon un mode de réalisation de l'invention,
[Fig.4] la figure 4 est une vue schématique en coupe axiale d'un cône d'entrée, selon un autre mode de réalisation de l'invention.

### Description détaillée de l'invention

Par convention dans la présente demande, les termes « intérieur » et « extérieur », et « interne » et « externe » sont définis radialement par rapport à un axe longitudinal X du moteur d'aéronef de la turbomachine. Ainsi, un cylindre s'étendant selon l'axe X du moteur comporte une face intérieure tournée vers l'axe du moteur et une surface extérieure, opposée à sa surface intérieure. On entend par « axial » ou « axialement » toute direction parallèle à l'axe X et par « transversalement » ou « transversal » toute direction perpendiculaire à l'axe X. De même, les termes « amont » et « aval » sont définis par rapport au sens de circulation de l'air dans la turbomachine.

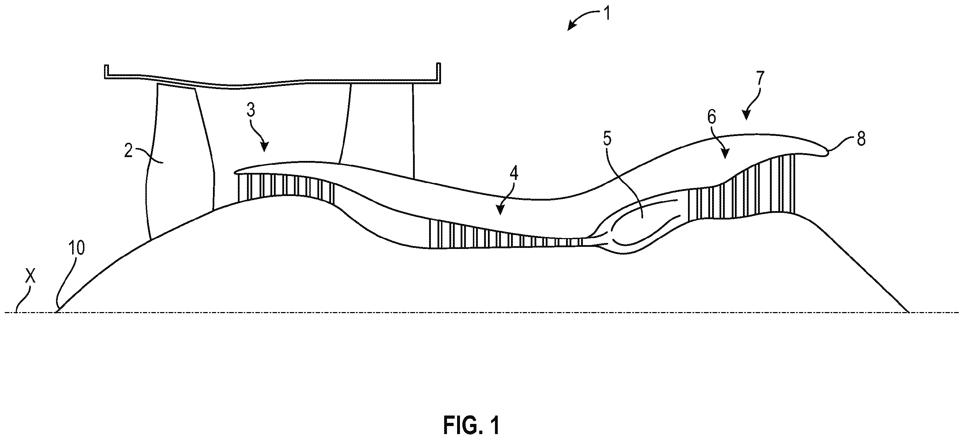

La figure 1 montre une turbomachine 1 à double flux. Cela n'est cependant pas limitatif et la turbomachine peut être d'un autre type, comme par exemple un turbopropulseur.

La turbomachine 1 s'étend suivant un axe longitudinal X et comprend d'amont en aval, dans le sens d'écoulement des gaz, une soufflante 2, un ou plusieurs étage de compresseurs (par exemple un compresseur basse pression 3 et un compresseur haute pression 4), une chambre de combustion 5, un ou plusieurs étages de turbine (par exemple une turbine haute pression 6 et une turbine basse pression 7), et une tuyère d'échappement 8 des gaz. La soufflante 2, le compresseur basse pression 3 et la turbine basse pression 7 sont reliés à un arbre de basse pression s'étendant suivant l'axe longitudinal. Le compresseur haute pression 4 et la turbine haute pression 6 sont reliés à un arbre haute pression ménagé autour de l'arbre basse pression. La turbine basse pression 7 entraîne l'arbre basse pression en rotation, tandis que la turbine haute pression 6 entraîne l'arbre haute pression en rotation.

La turbomachine 1 comprend en outre, en amont de la soufflante 2, un cône d'entrée d'air 10 qui est monté sur la soufflante 2 par l'intermédiaire d'une virole (non représentée), de préférence par des fixations de type boulons. La virole est ménagée en aval du cône d'entrée 10 et cette virole est également reliée à l'arbre basse pression.

Le cône d'entrée 10 avec la virole sont reliées au rotor, autrement dit aux parties tournantes de la turbomachine 1. Le cône d'entrée 10 tourne donc autour de l'axe longitudinal X.

Le cône d'entrée d'air est montré plus en détail aux figures 2 à 4.

La figure 2 montre le cône d'entrée 10 de l'art antérieur, tel que décrit précédemment, dans l'arrière plan technique de la présente demande.

La figure 3 illustre le cône d'entrée 10 selon l'invention, qui comprend une pointe 11 disposée en amont et un corps tronconique 12 disposé en aval. En fonctionnement, le cône d'entrée 10 est en rotation autour de l'axe longitudinal X.

La pointe 11 du cône 10 est réalisée en matière élastiquement déformable. Par exemple, cette pointe 11 peut comprendre un matériau en élastomère ou en silicone. Le corps tronconique 12 du cône d'entrée est réalisé dans un matériau qui est plus rigide par rapport à la pointe 11. Par exemple, ce corps tronconique 12 peut être en matériau métallique ou en composite.

La pointe 11 comprend un sommet par lequel passe l'axe de rotation X du cône d'entrée 10 qui est donc confondu avec l'axe longitudinal X de la turbomachine. Du côté opposé au sommet, la pointe 11 comprend également une base de fixation 11p sur une extrémité amont 12p du corps tronconique 12 pour être dans la continuité aérodynamique. Le corps tronconique 12, quant à lui, comprend donc l'extrémité amont 12p et une extrémité aval qui est configurée pour s'assembler avec la virole avant sur la soufflante 2 de la turbomachine. L'extrémité amont 12p se fixe à la base de fixation 11p de la pointe 11, et a un diamètre plus petit que le diamètre de l'extrémité aval du corps tronconique 12.

La base de fixation 11p et l'extrémité amont 12p du corps tronconique 12 présentent une forme générale circulaire ou ovale, de préférence complémentaire l'une de l'autre, et qui s'étendent dans un plan de liaison P. L'une des particularités de l'invention réside dans le fait que ce plan de liaison P est incliné par rapport à l'axe X de rotation du cône d'entrée, par rapport à un plan transversal T à l'axe X. Ceci permet de conférer à la pointe 11 sa forme excentrique. Le plan de liaison P est incliné d'un angle α par rapport au plan transversal T à l'axe X. L'angle α peut être compris entre 10° et 35° par rapport à l'axe X. De préférence, l'angle α est compris entre 15° et 25°. L'angle α du plan de liaison P est par exemple choisi en fonction de la dimension du cône d'entrée, de la vitesse de rotation du cône et/ou du type de turbomachine.

Le plan de liaison P est positionné de façon à définir un centre de gravité du cône d'entrée déporté en dehors de son axe de géométrie. Ceci provoque un déséquilibre ou un balourd au niveau de la pointe en fonctionnement, et favorisant avantageusement le décrochage de la glace qui se forme sur la pointe en fonctionnement.

Selon l'invention illustrée sur la figure 3, la base de fixation 11p de la pointe 11 est collée avec l'extrémité amont 12p, de sorte à assembler de façon efficace et simple la pointe au corps tronconique, tout en limitant l'encombrement du cône d'entrée d'air.

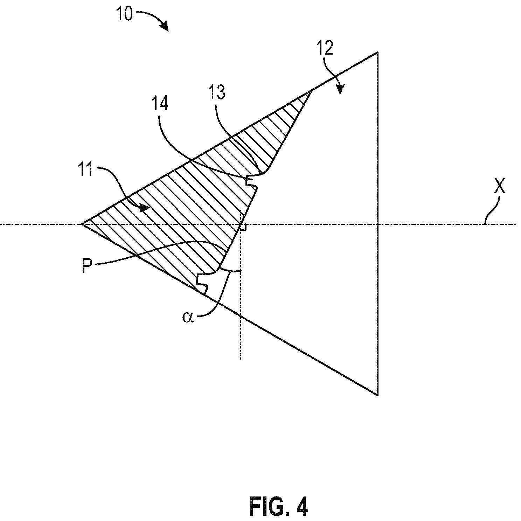

Selon l'invention illustrée sur la figure 4, le corps tronconique 12 peut comprendre un ou plusieurs ergots 14 s'engageant dans un évidement 13 de la pointe 11, de façon à verrouiller en rotation la pointe sur le corps tronconique et/ou pour faciliter le centrage de la pointe sur le corps. Les ergots 14 sont répartis autour du pourtour circonférentiel de l'extrémité amont 12p du corps tronconique 12. Les évidements 13 sont également répartis autour du pourtour circonférentiel de la base de fixation 11p de la pointe 11.

La pointe 11 du cône d'entrée 10 peut être monobloc. Par exemple, une pointe 11 en élastomère peut être réalisée par moulage, tout en optimisant les angles de dépouille et les épaisseurs pour respecter les contraintes liées à la technique du moulage et de démoulage.

La pointe 11 peut être applicable à tout type de cône d'entrée d'air d'une turbomachine, tout en adaptant les angles et longueurs de la pointe en fonction des dimensions du cône d'entrée. Par ailleurs, la dureté de la pointe réalisée en matière élastiquement déformable, est un paramètre pouvant être variable en fonction de la vitesse de rotation, de l'angle d'attaque et des dimensions du cône d'entrée.

La conception du cône d'entrée d'air selon l'invention, apporte plusieurs avantages qui sont, notamment de :
- fragiliser une taille importante de couche de glace accrétée au niveau du cône d'entrée d'air, et augmenter la fréquence de détachement de la glace ;
- amplifier de façon efficace et rapide la rupture de la couche de glace se formant sur le cône d'entrée ;
- réduire les impacts subis par la turbomachine lors du détachement de la glace ;
- simplifier et désencombrer l'assemblage et le fonctionnement du cône d'entrée sur la turbomachine ;
- s'adapter facilement sur les turbomachines actuelles.

Globalement, cette solution proposée est simple, efficace et économique à réaliser et à assembler sur une turbomachine, tout en assurant une désaccrétion de glace et une durée de vie optimale du cône d'entrée d'air.

## Revendications

1. Cône d'entrée (10) pour une turbomachine (1) d'aéronef, comportant un corps tronconique (12) et une pointe (11) en matériau élastiquement déformable fixée à une extrémité (12p) de plus petit diamètre dudit corps (12), la pointe (11) comportant un sommet configuré pour être situé sur un axe de rotation (X) du cône et une base de fixation (11p) sur ladite extrémité (12p), **caractérisé en ce que** ladite base (11p) a une forme générale circulaire ou ovale, cette base s'étend dans un plan de liaison P et ledit plan de liaison P est incliné par rapport à un plan transversal (T) perpendiculaire audit axe de rotation (X).

2. Cône selon la revendication 1, **caractérisé en ce que** ledit plan de liaison P est incliné d'un angle (α) compris entre 10° et 35° par rapport au plan transversal (T) .

3. Cône selon la revendication 1 ou 2, **caractérisé en ce que** la pointe (11) est monobloc.

4. Cône selon l'une des revendications 1 à 3, **caractérisé en ce que** la pointe (11) est collée sur le corps (12).

5. Cône selon l'une des revendications 1 à 4, **caractérisé en ce que** l'un des éléments choisis parmi la pointe (11) et le corps (12) comprend au moins un ergot (14) engagé dans un évidement (13) de l'autre des éléments, afin de bloquer en rotation la pointe sur le corps et/ou faciliter le centrage de la pointe sur le corps.

6. Cône selon l'une des revendications 1 à 5, **caractérisé en ce que** le corps (12) est réalisé en matériau composite ou métallique.

7. Cône selon l'une des revendications 1 à 6, **caractérisé en ce que** la pointe (11) est en élastomère.

8. Turbomachine (1) d'aéronef, comportant un cône d'entrée (10) selon l'une des revendications 1 à 7.

## Patentansprüche

1. Eintrittskegel (10) für eine Turbomaschine (1) eines Luftfahrzeugs, umfassend einen kegelstumpfförmigen Körper (12) und eine Spitze (11) aus elastisch verformbarem Material, die an einem Ende (12p) mit kleinerem Durchmesser des Körpers (12) befestigt ist, wobei die Spitze (11) einen Scheitelpunkt, der ausgelegt ist, um auf einer Drehachse (X) des Kegels gelegen zu sein, und eine Basis zur Befestigung (11p) auf dem Ende (12p) umfasst, **dadurch gekennzeichnet, dass** die Basis (11p) eine allgemein kreisförmige oder ovale Form aufweist, wobei sich diese Basis in einer Verbindungsebene P erstreckt und die Verbindungsebene P in Bezug auf eine sich senkrecht zur Drehachse (X) erstreckende Ebene (T) geneigt ist.

2. Kegel nach Anspruch 1, **dadurch gekennzeichnet, dass** die Verbindungsebene P in Bezug auf die sich erstreckende Ebene (T) in einem Winkel (α) zwischen 10° und 35° geneigt ist.

3. Kegel nach Anspruch 1 oder 2, **dadurch gekennzeichnet, dass** die Spitze (11) einstückig ist.

4. Kegel nach einem der Ansprüche 1 bis 3, **dadurch gekennzeichnet, dass** die Spitze (11) auf dem Körper (12) geklebt ist.

5. Kegel nach einem der Ansprüche 1 bis 4, **dadurch gekennzeichnet, dass** eines der Elemente, das aus der Spitze (11) und dem Körper (12) ausgewählt ist, mindestens einen Nocken (14) umfasst, der in eine Aussparung (13) des anderen der Elemente eingreift, um die Spitze gegen Drehung auf dem Körper zu arretieren und/oder die Zentrierung der Spitze auf dem Körper zu erleichtern.

6. Kegel nach einem der Ansprüche 1 bis 5, **dadurch gekennzeichnet, dass** der Körper (12) aus Verbund- oder metallischem Material hergestellt ist.

7. Kegel nach einem der Ansprüche 1 bis 6, **dadurch gekennzeichnet, dass** die Spitze (11) aus Elastomer ist.

8. Turbomaschine (1) eines Luftfahrzeugs, umfassend einen Eintrittskegel (10) nach einem der Ansprüche 1 bis 7.

## Claims

1. An inlet cone (10) for an aircraft turbine engine (1), comprising a frustoconical body (12) and a tip (11) made from elastically deformable material fixed to an end (12p) of smaller diameter of said body (12), the tip (11) comprising a top configured to be situated on an axis of rotation (X) of the cone and a fastening base (11p) on said end (12p), **characterised in that** said base (11p) has a generally circular or oval shape, this base extends in a connecting plane P and said connecting plane P is inclined relative to a transverse plane (T) perpendicular to said axis of rotation (X).

2. The cone according to claim 1, **characterised in that** said connecting plane P is inclined at an angle (α) of between 10° and 35° relative to the transverse plane (T).

3. The cone according to claim 1 or 2, **characterised in that** the tip (11) is single part.

4. The cone according to one of claims 1 to 3, **characterised in that** the tip (11) is bound to the body (12).

5. The cone according to one of claims 1 to 4, **characterised in that** one of the elements chosen from the tip (11) and the body (12) comprises at least one lug (14) engaged in a recess (13) of the other of the elements, in order to block the tip in rotation on the body and/or facilitate the centering of the tip on the body.

6. The cone according to one of claims 1 to 5, **characterised in that** the body (12) is made of composite or metallic material.

7. The cone according to one of claims 1 to 6, **characterised in that** the tip (11) is made of elastomer.

8. An aircraft turbine engine (1), comprising an inlet cone (10) according to one of claims 1 to 7.
